# EUROPEAN PATENT APPLICATION

(11) **EP 4 592 131 A1**
(43) Date of publication of application: **30.07.2025**
(21) Application number: 24223389.8
(22) Date of filing: 27.12.2024
(51) Int. Cl.: B60L 53/126, B60L 53/65, B60L 53/66

(54) **POWER MANAGEMENT SYSTEM AND POWER MANAGEMENT METHOD FOR WIRELESS POWER SUPPLY**

(30) Priority: 12.01.2024 TW 113101444
(71) Applicant: APh ePower Co., Ltd., Kaohsiung City 821 (TW)
(72) Inventor: SU, Hsiu-Hsien, 821 Kaohsiung City (TW); TZENG, Yun-Chi, 821 Kaohsiung City (TW); HUANG, Kuan-Chieh, 821 Kaohsiung City (TW)
(74) Representative: Becker, Eberhard

(57) **Abstract**

A power management system (100, 200) and a power management method for wireless power supply are provided. The power management system (100, 200) includes a first electric auxiliary vehicle (110_1, 210_1), a second electric auxiliary vehicle (110_2, 210_2), a management device (120, 220) and a wireless charging platform (130, 230). When the first electric auxiliary vehicle (110_1, 210_1) is located within a wireless charging range (RW) of the wireless charging platform (130, 230), a password (SKW) and a user identification code (UID) are provided to the management device (120, 220). The first electric auxiliary vehicle (110_1, 210_1) communicates with the management device (120, 220) to receive the password (SKW), and activates a wireless power supply function according to a verification operation of the password (SKW) and the user identification code (UID), thereby providing power to the second electric auxiliary vehicle (110_2, 210_2).

## Description

### BACKGROUND

### Technical Field

The disclosure relates to a power management system and a power management method, and in particular relates to a power management system and a power management method for wireless power supply.

### Description of Related Art

Generally speaking, electric auxiliary vehicles (e.g., electric auxiliary wheelchairs, electric auxiliary bicycles, electric auxiliary scooters, or electric motorcycles) are mobility vehicles that utilize electrical energy from batteries as a power source to assist users. The battery of an electric auxiliary vehicle must be charged. The batteries of current electric auxiliary vehicles may be charged using charging piles or charging stations.

However, when the power level of the battery of the electric auxiliary vehicle is insufficient, users often have to find charging piles or charging stations to charge the battery of the electric auxiliary vehicle. When the distance between the charging pile or charging station and the user is too far, it results in inconvenience to the user.

### SUMMARY

A power management system and a power management method for wireless power supply, which may improve the convenience of charging electric auxiliary vehicles, are provided in the disclosure.

The power management system of the disclosure includes a first electric auxiliary vehicle, a second electric auxiliary vehicle, a management device, and a wireless charging platform. When the first electric auxiliary vehicle is located within a wireless charging range of the wireless charging platform, the wireless charging platform generates a password and provides the password and a user identification code of the first electric auxiliary vehicle to the management device. The first electric auxiliary vehicle communicates with the management device according to the user identification code to receive the password from the management device and displays the password, and activates a wireless power supply function according to a verification operation of the password and the user identification code, thereby providing power to the second electric auxiliary vehicle by a wireless power supply manner.

The power management method of the disclosure includes the following operation. When the first electric auxiliary vehicle is located within a wireless charging range of the wireless charging platform, the wireless charging platform generates a password and provides the password and a user identification code of the first electric auxiliary vehicle to the management device. The first electric auxiliary vehicle communicates with the management device according to the user identification code to receive the password from the management device and displays the password. The first electric auxiliary vehicle activates the wireless power supply function according to the verification operation of the password and the user identification code. The first electric auxiliary vehicle provides power to the second electric auxiliary vehicle by a wireless power supply manner.

Based on the above, the first electric auxiliary vehicle activates the wireless power supply function according to the verification operation. After activating the wireless power supply function, the first electric auxiliary vehicle provides power to the second electric auxiliary vehicle by a wireless power supply manner. Therefore, the second electric auxiliary vehicle not require the utilization of a wireless charging platform for charging. The second electric auxiliary vehicle may be charged using the first electric auxiliary vehicle. In this way, the charging convenience of the second electric auxiliary vehicle may be improved.

### BRIEF DESCRIPTION OF THE DRAWINGS

FIG. 1 is a schematic diagram of a power management system according to an embodiment of the disclosure.
FIG. 2 is a flowchart of a power management method according to an embodiment of the disclosure.
FIG. 3 is a flowchart of a power management method according to an embodiment of the disclosure.
FIG. 4 is a flowchart of a power management method according to an embodiment of the disclosure.
FIG. 5 is a flowchart of a power management method according to an embodiment of the disclosure.
FIG. 6 is a circuit schematic diagram of a power management system according to an embodiment of the disclosure.
FIG. 7 is a circuit schematic diagram of an electric auxiliary vehicle according to an embodiment of the disclosure.

### DETAILED DESCRIPTION OF DISCLOSED EMBODIMENTS

A portion of the embodiments of the disclosure will be described in detail with reference to the accompanying drawings. Element symbol referenced in the following description will be regarded as the same or similar element when the same element symbol appears in different drawings. These examples are only a portion of the disclosure and do not disclose all possible embodiments of the disclosure. More precisely, these embodiments are only examples within the scope of the patent application of the disclosure.

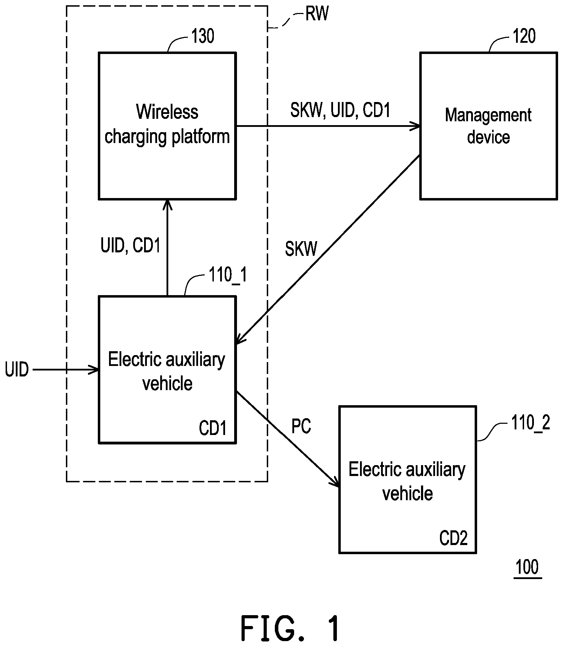

Referring to FIG. 1, FIG. 1 is a schematic diagram of a power management system according to an embodiment of the disclosure. In this embodiment, the power management system 100 includes electric auxiliary vehicles 110_1 and 110_2, a management device 120, and a wireless charging platform 130. The wireless charging platform 130 may wirelessly charge (or wirelessly power) at least one of the electric auxiliary vehicles 110_1 and 110_2 within the wireless charging range RW. In this embodiment, when the electric auxiliary vehicle 110_1 is located within the wireless charging range RW of the wireless charging platform 130, the wireless charging platform 130 generates the password SKW and provides the password SKW and the user identification code UID of the electric auxiliary vehicle 110_1 to the management device 120.

Furthermore, the user of the electric auxiliary vehicle 110_1 has operational authorization. Therefore, the user has a user identification code UID. In order to enable the electric auxiliary vehicle 110_1 to have wireless power supply authorization, the user may operate at least one of the wireless charging platform 130 and the electric auxiliary vehicle 110_1 based on the user identification code UID, so that the wireless charging platform 130 communicates with the electric auxiliary vehicle 110_1. Therefore, the wireless charging platform 130 generates the password SKW and obtains the user identification code UID. Next, the wireless charging platform 130 provides the password SKW and the user identification code UID of the electric auxiliary vehicle 110_1 to the management device 120. Therefore, when the electric auxiliary vehicle 110_1 is located outside the wireless charging range RW of the wireless charging platform 130, the wireless charging platform 130 notifies the management device 120 to bind the user identification code UID of the electric auxiliary vehicle 110_1 and the password SKW.

In this embodiment, the password SKW may be a time-sensitive password or at least one one-time password.

In some embodiments, the wireless charging platform 130 may also provide the password SKW and the user identification code UID to the electric auxiliary vehicle 110_1 (not shown).

In some embodiments, the user may provide the user identification code UID and the vehicle code CD1 of the electric auxiliary vehicle 110_1. The wireless charging platform 130 generates the password SKW, and provides the password SKW, the user identification code UID and the vehicle code CD1 to the management device 120. Therefore, the management device 120 may bind the user identification code UID and the password SKW of the electric auxiliary vehicle 110_1 according to the vehicle code CD1.

In this embodiment, the electric auxiliary vehicle 110_1 communicates with the management device 120 according to the user identification code UID to receive the password SKW from the management device 120 and displays the password SKW. The electric auxiliary vehicle 110_1 activates the wireless power supply function according to the verification operation of the password SKW and the user identification code UID. Therefore, the electric auxiliary vehicle 110_1 may be allowed to provide power to the electric auxiliary vehicle 110_2 by a wireless power supply manner.

For example, the user may input the user identification code UID to the electric auxiliary vehicle 110_1. The electric auxiliary vehicle 110_1 receives the password SKW from the management device 120 and displays the password SKW. Next, the user inputs the password SKW for the electric auxiliary vehicle 110_1 to complete the verification operation. Therefore, the electric auxiliary vehicle 110_1 is allowed to wirelessly provide the wireless power PC to the electric auxiliary vehicle 110_2.

It is worth mentioning here that the electric auxiliary vehicle 110_1 activates the wireless power supply function according to the verification operation. After activating the wireless power supply function, the electric auxiliary vehicle 110_1 provides power to the electric auxiliary vehicle 110_2 by a wireless power supply manner. Therefore, the electric auxiliary vehicle 110_2 does not require the utilization of the wireless charging platform 130 for charging. The electric auxiliary vehicle 110_2 may be charged using the electric auxiliary vehicle 110_1. In this way, the charging convenience of the electric auxiliary vehicle 110_2 may be improved.

In this embodiment, the electric auxiliary vehicles 110_1 and 110_2 are, for example, electric auxiliary wheelchairs, electric auxiliary bicycles, electric auxiliary scooters or electric motorcycles. The management device 120 may be an electronic device with computing capabilities, such as any type of server, desktop computer, laptop, smart phone, etc. The management device 120 may communicate with the wireless charging platform 130 and the electric auxiliary vehicles 110_1 and 110_2 by using wired communication methods or wireless communication methods well known to those skilled in the art.

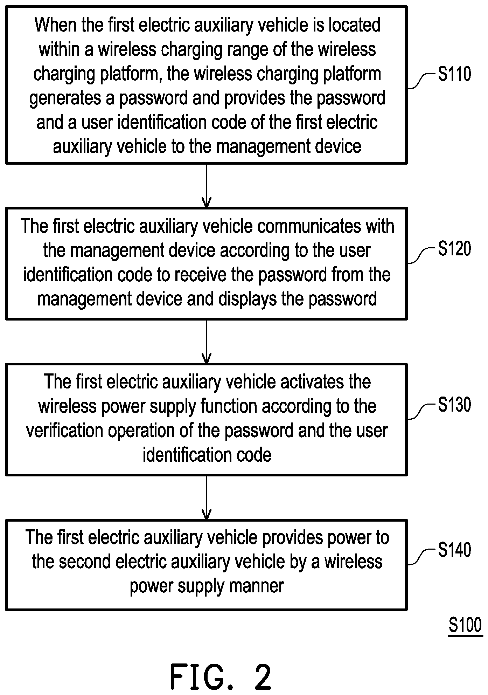

Referring to FIG. 1 and FIG. 2 at the same time, FIG. 2 is a flowchart of a power management method according to an embodiment of the disclosure. In this embodiment, the power management method S100 is suitable for the power management system 100. The power management method S100 includes steps S110 to S140. In step S110, when the electric auxiliary vehicle 110_1 (i.e., the first electric auxiliary vehicle) is located within the wireless charging range RW of the wireless charging platform 130, the wireless charging platform 130 generates the password SKW and provided the password SKW and a user identification code UID of the electric auxiliary vehicle 110_1 to the management device 120.

In step S120, the electric auxiliary vehicle 110_1 communicates with the management device 120 according to the user identification code UID to receive the password SKW from the management device 120 and displays the password SKW. In step S130, the electric auxiliary vehicle 110_1 activates the wireless power supply function according to the verification operation of the password SKW and the user identification code UID. In step S140, the electric auxiliary vehicle 110_1 provides power to the electric auxiliary vehicle 110_2 by a wireless power supply manner.

The implementation details of steps S110 to S140 have been clearly described in the embodiment of FIG. 1, so they are not repeated herein.

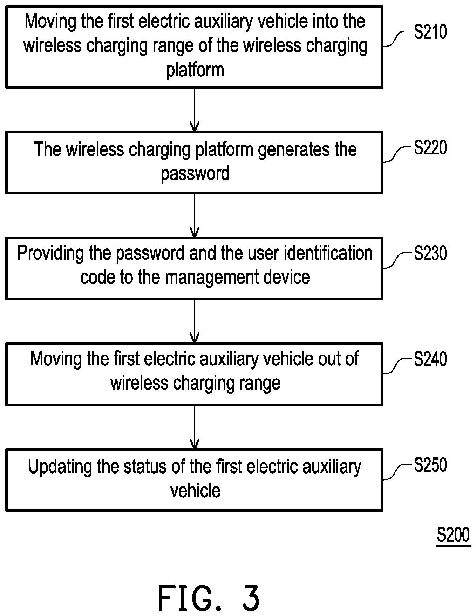

Referring to FIG. 1 and FIG. 3 at the same time, FIG. 3 is a flowchart of a power management method according to an embodiment of the disclosure. In this embodiment, the power management method S200 is suitable for the power management system 100. The power management method S200 is a setting step of the electric auxiliary vehicle 110_1. The power management method S200 includes steps S210 to S250.

In step S210, the electric auxiliary vehicle 110_1 is moved into the wireless charging range RW of the wireless charging platform 130. In step S220, the wireless charging platform 130 generates the password SKW. In step S230, the wireless charging platform 130 provides the password SKW and the user identification code UID to the management device 120. When step S230 is completed, the setting of the electric auxiliary vehicle 110_1 is also completed. In step S240, the electric auxiliary vehicle 110_1 is moved out of the wireless charging range RW. Next, the management device 120 updates the status of the electric auxiliary vehicle 210_1 in step S250. In other words, the management device 120 binds the user identification code UID and the password SKW of the electric auxiliary vehicle 110_1.

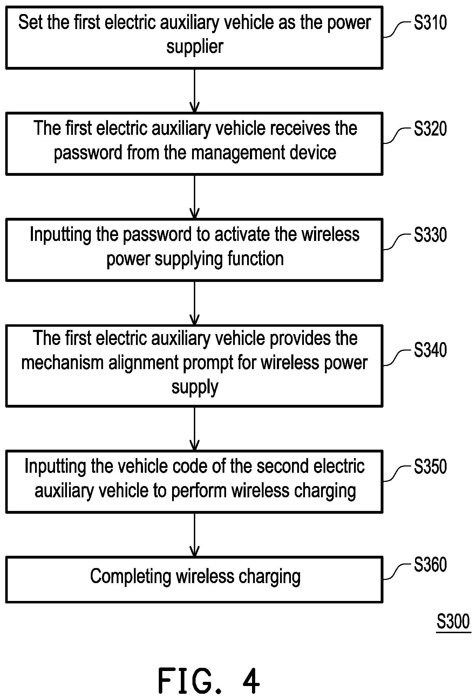

Referring to FIG. 1 and FIG. 4 at the same time, FIG. 4 is a flowchart of a power management method according to an embodiment of the disclosure. In this embodiment, the power management method S300 is suitable for the power management system 100. The power management method S300 is a step of controlling the electric auxiliary vehicle 110_1 to perform wireless power supply. The power management method S300 includes steps S310 to S360.

In step S310, the electric auxiliary vehicle 110_1 is set as the "power supplier". For example, the electric auxiliary vehicle 110_1 includes an operation interface. The user of the electric auxiliary vehicle 110_1 may set the electric auxiliary vehicle 110_1 as a "power supplier" by using the operation interface. In step S320, the electric auxiliary vehicle 110_1 receives the password SKW from the management device 120. For example, after the user of the electric auxiliary vehicle 110_1 inputs the user identification code UID by using the operation interface, the management device 120 may provide the password SKW to the electric auxiliary vehicle 110_1 by using a wireless method. The electric auxiliary vehicle 110_1 displays the password SKW by using the operation interface. Therefore, in step S330, the user of the electric auxiliary vehicle 110_1 may input the password SKW to activate the wireless power supply function. In step S340, the electric auxiliary vehicle 110_1 provides a mechanism alignment prompt for wireless power supply.

In step S350, the user of the electric auxiliary vehicle 110_1 inputs the vehicle code CD2 of the electric auxiliary vehicle 110_2 into the operation interface. Therefore, the electric auxiliary vehicle 110_1 wirelessly charges the electric auxiliary vehicle 110_2. In step S360, wireless charging is completed.

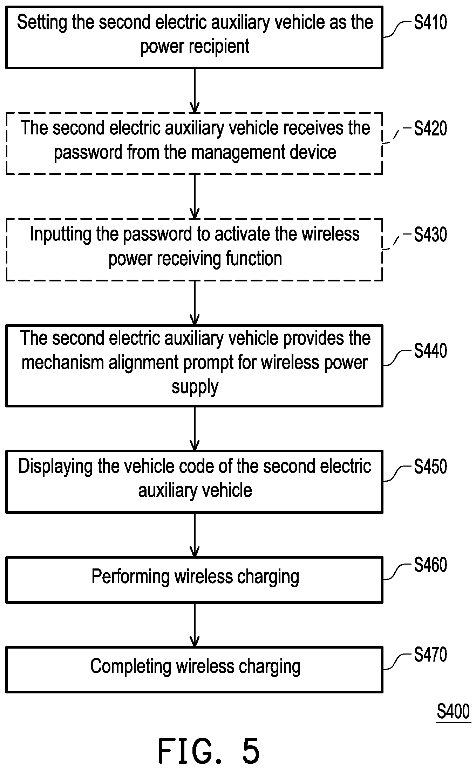

Referring to FIG. 1 and FIG. 5 at the same time, FIG. 5 is a flowchart of a power management method according to an embodiment of the disclosure. In this embodiment, the power management method S400 is suitable for the power management system 100. The power management method S400 is a step of controlling the electric auxiliary vehicle 110_2 to receive wireless power. The power management method S400 includes steps S410 to S470. In step S410, the user of the electric auxiliary vehicle 110_2 may set the electric auxiliary vehicle 110_2 as a "power recipient" by using the operation interface. In step S420, the electric auxiliary vehicle 110_2 receives the password SKW from the management device 120. For example, after the user of the electric auxiliary vehicle 110_2 inputs the user identification code by using the operation interface, the management device 120 may provide the password SKW to the electric auxiliary vehicle 110_2 by using a wireless method. The electric auxiliary vehicle 110_2 displays the password SKW by using the operation interface. Therefore, in step S430, the user of the electric auxiliary vehicle 110_2 may input the password SKW to activate the wireless power receiving function. In other words, the electric auxiliary vehicle 110_2 activates the wireless power receiving function according to the verification operation of the electric auxiliary vehicle 110_2 (i.e., steps S420 and S430).

In some embodiments, the electric auxiliary vehicle 110_2 may activate the wireless power receiving function without requiring a verification operation. In other words, steps S420 and S430 may be omitted.

In step S440, the electric auxiliary vehicle 110_2 provides a mechanism alignment prompt for wireless power supply. In step S450, the electric auxiliary vehicle 110_2 displays the vehicle code CD2 of the electric auxiliary vehicle 110_2. Therefore, the user of the electric auxiliary vehicle 110_1 may obtain the vehicle code CD2 of the electric auxiliary vehicle 110_2. The user of the electric auxiliary vehicle 110_1 inputs the vehicle code CD2 of the electric auxiliary vehicle 110_2 into the operation interface (e.g., step S350). Therefore, in step S460, the electric auxiliary vehicle 110_1 wirelessly charges the electric auxiliary vehicle 110_2. The electric auxiliary vehicle 110_2 performs wireless charging. In step S470, wireless charging is completed.

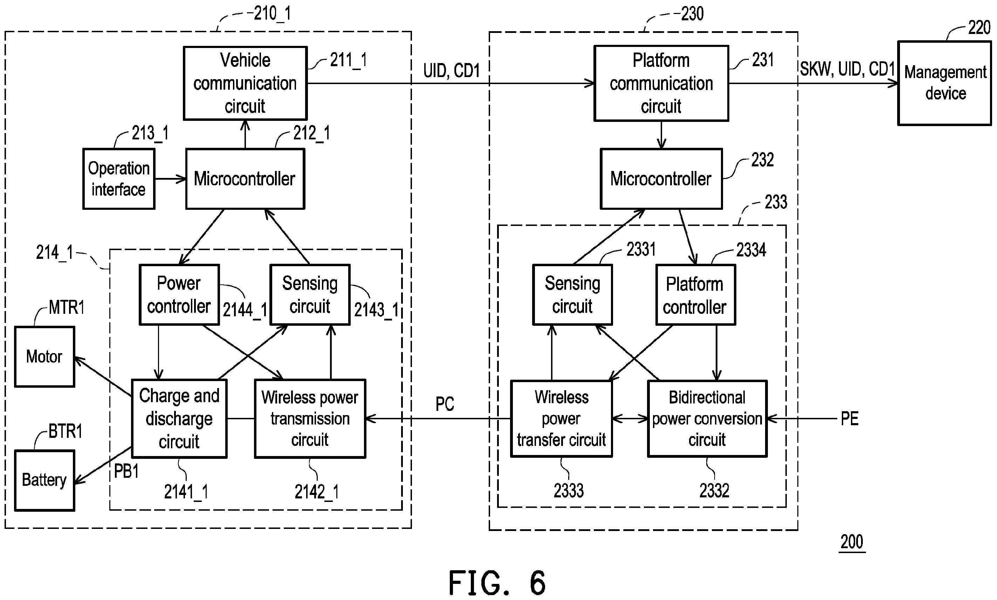

Referring to FIG. 3 and FIG. 6 at the same time, FIG. 6 is a circuit schematic diagram of a power management system according to an embodiment of the disclosure. In this embodiment, the power management system 200 includes an electric auxiliary vehicle 210_1, a management device 220, and a wireless charging platform 230. The power management system 200 is suitable for the power management method S200. The electric auxiliary vehicle 210_1 is moved into the wireless charging range of the wireless charging platform 230 in step S210. The electric auxiliary vehicle 210_1 includes a vehicle communication circuit 211_1, a microcontroller 212_1, and an operation interface 213_1. The microcontroller 212_1 is coupled to the vehicle communication circuit 211_1 and the operation interface 213_1. When the electric auxiliary vehicle 210_1 is located within the wireless charging range of the wireless charging platform 230, the operation interface 213_1 is operated to control the microcontroller 212_1. The user of the electric auxiliary vehicle 210_1 operates the operation interface 213_1. Therefore, the microcontroller 212_1 notifies the wireless charging platform 230 to generate the password SKW through the vehicle communication circuit 211_1.

For example, in step S220, the user of the electric auxiliary vehicle 210_1 may input the user identification code UID into the operation interface 213_1. The vehicle communication circuit 211_1 sends the user identification code UID to the wireless charging platform 230. The wireless charging platform 230 includes a platform communication circuit 231 and a microcontroller 232. The microcontroller 232 receives the user identification code UID through the platform communication circuit 231, and generates the password SKW in response to the user identification code UID.

For example, the user of the electric auxiliary vehicle 210_1 may input the user identification code UID into the operation interface 213_1. The vehicle communication circuit 211_1 sends the user identification code UID and the vehicle code CD1 of the electric auxiliary vehicle 210_1 to the wireless charging platform 230. The microcontroller 232 receives the user identification code UID and the vehicle code CD1 through the platform communication circuit 231, and generates the password SKW in response to the user identification code UID and the vehicle code CD1.

In step S230, the platform communication circuit 231 provides the password SKW and the user identification code UID to the management device 220. In one embodiment, the platform communication circuit 231 may provide the password SKW, the user identification code UID, and the vehicle code CD1 to the management device 220.

In step S240, the electric auxiliary vehicle 210_1 is moved out of the wireless charging range. Next, the management device 220 updates the status of the electric auxiliary vehicle 210_1 in step S250. In other words, the management device 220 binds the user identification code UID and the password SKW of the electric auxiliary vehicle 210_1.

In this embodiment, the wireless charging platform 230 also includes a power control circuit 233. The power control circuit 233 is coupled to the microcontroller 232. The microcontroller 232 may control the power control circuit 233 to wirelessly charge the electric auxiliary vehicle 210_1. In this embodiment, the power control circuit 233 includes a sensing circuit 2331, a bidirectional power conversion circuit 2332, a wireless power transmission circuit 2333, and a platform controller 2334. The bidirectional power conversion circuit 2332 is coupled to the external power PE. The wireless power transmission circuit 2333 is coupled to the bidirectional power conversion circuit 2332. The sensing circuit 2331 senses the platform power supply level of the power control circuit 233. In this embodiment, the sensing circuit 2331 may sense the platform power supply level through one of the bidirectional power conversion circuit 2332 and the wireless power transmission circuit 2333.

The platform controller 2334 is coupled to the microcontroller 232, the bidirectional power conversion circuit 2332, and the wireless power transmission circuit 2333. The platform controller 2334 controls the bidirectional power conversion circuit 2332 to convert the external power PE into wireless power PC, and controls the wireless power transmission circuit 2333 to provide the wireless power PC to the electric auxiliary vehicle 210_1. The wireless power transmission circuit 2333 is, for example, a coil circuit.

In this embodiment, the electric auxiliary vehicle 210_1 also includes a battery BTR1, a motor MTR1, and a power control circuit 214_1. The battery BTR1 stores battery power PB1. The power control circuit 214_1 is coupled to the battery BTR1, the motor MTR1, and the microcontroller 212_1. During a riding period, the power control circuit 214_1 drives the motor MTR1 by using the battery power PB1 of the battery BTR1, and charges the battery BTR1 by using a pedaling force. In addition, when the electric auxiliary vehicle 210_1 is located within the wireless charging range of the wireless charging platform 230, the power control circuit 214_1 charges the battery BTR1 by using the wireless power PC from the wireless charging platform 230.

The power control circuit 214_1 includes a charge and discharge circuit 2141_1, a wireless power transmission circuit 2142_1, a sensing circuit 2143_1, and a power controller 2144_1. The charge and discharge circuit 2141_1 is coupled to the battery BTR1 and the motor MTR1. The wireless power transmission circuit 2142_1 is coupled to the charge and discharge circuit 2141_1. The power controller 2144_1 is coupled to the microcontroller 212_1, the charge and discharge circuit 2141_1, and the wireless power transmission circuit 2142_1. When the electric auxiliary vehicle 210_1 is located within the wireless charging range of the wireless charging platform 230, the power controller 2144_1 controls the wireless power transmission circuit 2142_1 to receive the wireless power PC from the wireless charging platform 230, and controls the charge and discharge circuit 2141_1 to convert the wireless power PC into battery power PB1. The charge and discharge circuit 2141_1 charges the battery BTR1 by using the battery power PB1. The wireless power transmission circuit 2142_1 is, for example, a coil circuit.

The sensing circuit 2143_1 senses the status of the battery BTR1. In this embodiment, the sensing circuit 2143_1 may sense the health status of the battery BTR1 or the battery power PB1 through one of the charge and discharge circuit 2141_1 and the wireless power transmission circuit 2142_1.

In this embodiment, the vehicle communication circuit 211_1 can, for example, perform wireless communication with the platform communication circuit 231 by using the ZigBee wireless network protocol (but the disclosure is not limited thereto). The platform communication circuit 231 may, for example, perform wireless communication with the management device 220 by using any form of wireless network protocol.

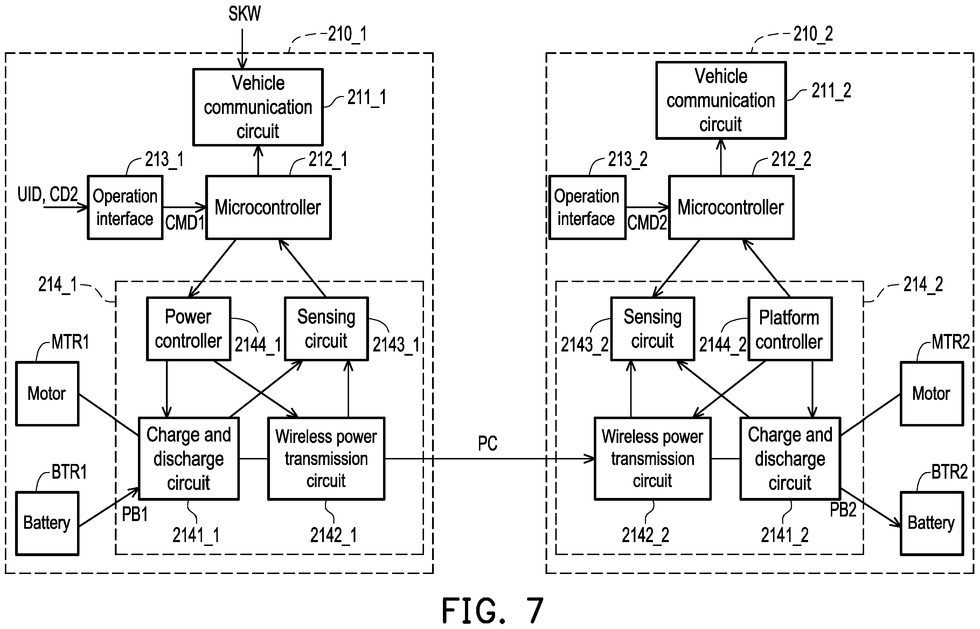

Referring to FIG. 4, FIG. 5 and FIG. 7 at the same time, FIG. 7 is a circuit schematic diagram of an electric auxiliary vehicle according to an embodiment of the disclosure. In this embodiment, FIG. 7 shows the electric auxiliary vehicles 210_1 and 210_2. The electric auxiliary vehicles 210_1 and 210_2 are suitable for power management methods S400 and S500.

In this embodiment, the electric auxiliary vehicle 210_1 includes a vehicle communication circuit 211_1, a microcontroller 212_1, an operation interface 213_1, a battery BTR1, a motor MTR1, and a power control circuit 214_1. The electric auxiliary vehicle 210_2 includes a vehicle communication circuit 211_2, a microcontroller 212_2, an operation interface 213_2, a battery BTR2, a motor MTR2, and a power control circuit 214_2. The power control circuit 214_2 includes a charge and discharge circuit 2141_2, a wireless power transmission circuit 2142_2, a sensing circuit 2143_2, and a power controller 2144_2. The coupling method of the vehicle communication circuit 211_2, the microcontroller 212_2, the operation interface 213_2, the battery BTR2, the motor MTR2, and the power control circuit 214_2 is similar to the coupling method of the vehicle communication circuit 211_1, the microcontroller 212_1, the operation interface 213_1, the battery BTR1, the motor MTR1, and the power control circuit 214_1, and details are not be repeated herein.

In step S310, the operation interface 213_1 of the electric auxiliary vehicle 210_1 is operated to provide the power supply command CMD1. The microcontroller 212_1 sets the electric auxiliary vehicle 210_1 as the "power supplier" in response to the power supply command CMD1. In step S320, the electric auxiliary vehicle 210_1 receives the password SKW from the management device (e.g., the management device 220 shown in FIG. 6) by using the vehicle communication circuit 211_1. For example, after the user of the electric auxiliary vehicle 210_1 inputs the user identification code UID by using the operation interface 213_1, the management device may provide the password SKW to the vehicle communication circuit 211_1 by using a wireless method. The electric auxiliary vehicle 210_1 displays the password SKW by using the operation interface 213_1. Therefore, in step S330, the user of the electric auxiliary vehicle 210_1 may activate the wireless power supply function according to the verification operation. Next, in step S340, the electric auxiliary vehicle 210_1 provides a mechanism alignment prompt for wireless power supply. For example, the operation interface 213_1 may prompt the user of the electric auxiliary vehicle 210_1 to bring the wireless power transmission circuit 2142_1 of the electric auxiliary vehicle 210_1 close to the wireless power transmission circuit 2142_2 of the electric auxiliary vehicle 210_2 by using at least one of graphics, text, and speech.

In step S410, the operation interface 213_2 of the electric auxiliary vehicle 210_2 is operated to provide the power receiving command CMD2. The microcontroller 212_1 sets the electric auxiliary vehicle 210_2 as the "power recipient" in response to the power receiving command CMD2.

In step S420, the electric auxiliary vehicle 210_2 receives the password SKW from the management device by using the vehicle communication circuit 211_2. For example, after the user of the electric auxiliary vehicle 210_2 inputs the user identification code of the user of the electric auxiliary vehicle 210_2 or the user identification code UID of the user of the electric auxiliary vehicle 210_1 by using the operation interface 213_2, the management device may provide the password SKW to the vehicle communication circuit 211_2 by using a wireless method. The electric auxiliary vehicle 210_2 displays the password SKW by using the operation interface 213_2. Therefore, in step S430, the user of the electric auxiliary vehicle 210_2 may input the password SKW to activate the wireless power supply function. Next, in step S440, the electric auxiliary vehicle 210_2 provides a mechanism alignment prompt for wireless power supply. For example, the operation interface 213_2 may prompt the user of the electric auxiliary vehicle 210_2 to bring the wireless power transmission circuit 2142_2 of the electric auxiliary vehicle 210_2 close to the wireless power transmission circuit 2142_1 of the electric auxiliary vehicle 210_1 by using at least one of graphics, text, and speech.

In step S450, the operation interface 213_2 displays the vehicle code CD2 of the electric auxiliary vehicle 210_2. The user of the electric auxiliary vehicle 210_1 inputs the vehicle code CD2 of the electric auxiliary vehicle 210_2 into the operation interface 213_1 in step S350. Therefore, the electric auxiliary vehicle 210_1 wirelessly charges the electric auxiliary vehicle 210_2 in steps S350 and S460.

In step S350, the microcontroller 212_1 controls the power control circuit 214_1 in response to the power supply command CMD1 and the verification operation of the electric auxiliary vehicle 210_1. Therefore, the power control circuit 214_1 converts the battery power PB1 into the wireless power PC, and transmits the wireless power PC to the electric auxiliary vehicle 210_2 by using a wireless method. Furthermore, when the electric auxiliary vehicle 210_1 is set as the power supplier, the power controller 2144_1 controls the charge and discharge circuit 2141_1 to convert the battery power PB1 into the wireless power PC, and controls the wireless power transmission circuit 2142_1 to output the wireless power PC.

In step S460, the microcontroller 212_2 controls the power control circuit 214_2 in response to the power receiving command CMD2. Therefore, the power control circuit 214_2 converts the wireless power PC from the wireless power transmission circuit 2142_1 into the battery power PB2, and charges the battery BTR2 by using the battery power PB2. Furthermore, when the electric auxiliary vehicle 210_2 is set as the power recipient, the power controller 2144_2 controls the wireless power transmission circuit 2142_2 to receive the wireless power PC, and controls the charge and discharge circuit 2141_2 to convert the wireless power PC into the battery power PB2. Therefore, the charge and discharge circuit 2141_2 charges the battery BTR2 by using the battery power PB2.

In this embodiment, the user of the electric auxiliary vehicle 210_1 may end the wireless charging by using the operation interface 213_1 in step S360.

In this embodiment, the sensing circuit 2143_2 senses the power level of the battery BTR2. When the battery BTR2 of the electric auxiliary vehicle 210_2 is in a fully charged state, the electric auxiliary vehicle 210_2 ends the wireless charging in step S470. In addition, the electric auxiliary vehicle 210_2 may notify the electric auxiliary vehicle 210_1 to end the wireless power supply function by using the vehicle communication circuit 211_2.

In this embodiment, when the mechanism alignment between the electric auxiliary vehicle 110_1 and the electric auxiliary vehicle 110_2 is abnormal, the sensing circuit 2143_2 cannot sense the wireless power PC through the wireless power transmission circuit 2142_2. Therefore, the electric auxiliary vehicle 210_2 ends wireless charging in step S470. In addition, the electric auxiliary vehicle 210_2 may notify the electric auxiliary vehicle 210_1 to end the wireless power supply function by using the vehicle communication circuit 211_2. In this embodiment, when the sensing circuit 2143_1 senses that the battery BTR1 has insufficient or abnormal power level, the electric auxiliary vehicle 110_1 ends wireless charging in step S360. At this time, the operation interfaces 213_1 and 213_2 provide corresponding abnormal messages.

In this embodiment, the vehicle communication circuit 211_1 can, for example, perform wireless communication with the vehicle communication circuit 211_2 by using the ZigBee wireless network protocol (but the disclosure is not limited thereto).

The microcontrollers 212_1, 212_2, 232 and the power controllers 2144_1 and 2144_2 respectively are, for example, for example, a central processing unit (CPU), or other programmable general-purpose or special-purpose microprocessor, a digital signal processor (DSP), a programmable controller, an application specific integrated circuit (ASIC), a programmable logic device (PLD), or other similar devices, or a combination of these devices, which may load and execute computer programs.

To sum up, the first electric auxiliary vehicle activates the wireless power supply function according to the verification operation. After activating the wireless power supply function, the first electric auxiliary vehicle provides power to the second electric auxiliary vehicle by a wireless power supply manner. Therefore, the user of the second electric auxiliary vehicle may use the first electric auxiliary vehicle that has activated wireless power supply to charge the second electric auxiliary vehicle. The user of the second electric auxiliary vehicle is not required to locate a wireless charging platform. In this way, the charging convenience of the second electric auxiliary vehicle may be improved.

## Claims

1. A power management system (100, 200) for wireless power supply, comprising:
a first electric auxiliary vehicle (110_1, 210_1),
a second electric auxiliary vehicle (110_2, 210_2);
a management device (120, 220); and
a wireless charging platform, configured to generate a password (SKW) and provide the password (SKW) and a user identification code (UID) of the first electric auxiliary vehicle (110_1, 210_1) to the management device (120, 220) when the first electric auxiliary vehicle (110_1, 210_1) is located within a wireless charging range (RW) of the wireless charging platform (130, 230),
wherein the first electric auxiliary vehicle (110_1, 210_1) communicates with the management device (120, 220) according to the user identification code (UID) to receive the password (SKW) from the management device (120, 220) and displays the password (SKW), and activates a wireless power supply function according to a verification operation of the password (SKW) and the user identification code (UID), thereby providing power to the second electric auxiliary vehicle (110_2, 210_2) by a wireless power supply manner.

2. The power management system (100, 200) according to claim 1, wherein when the first electric auxiliary vehicle (110_1, 210_1) is located outside the wireless charging range (RW) of the wireless charging platform (130, 230), the wireless charging platform (130, 230) notifies the management device (120, 220) to bind the user identification code (UID) of the first electric auxiliary vehicle (110_1, 210_1) and the password (SKW).

3. The power management system (100, 200) according to claim 1, wherein the first electric auxiliary vehicle (110_1, 210_1) comprises:
a vehicle communication circuit (211_1, 211_2);
a microcontroller (212_1, 212_2, 232), coupled to the vehicle communication circuit (211_1, 211_2); and
an operation interface (213_1, 213_2), coupled to the microcontroller (212_1, 212_2, 232) and configured to operate the operation interface (213_1, 213_2) to control the microcontroller (212_1, 212_2, 232) when the first electric auxiliary vehicle (110_1, 210_1) is located within the wireless charging range (RW) of the wireless charging platform (130, 230), so that the microcontroller (212_1, 212_2, 232) notifies the wireless charging platform (130, 230) to generate the password (SKW) through the vehicle communication circuit (211_1, 211_2).

4. The power management system (100, 200) according to claim 3, wherein:
the operation interface (213_1, 213_2) is operated to provide a power supply command, and
the microcontroller (212_1, 212_2, 232) sets the first electric auxiliary vehicle (110_1, 210_1) as a power supplier in response to the power supply command, and
the first electric auxiliary vehicle (110_1,210_1) activates the wireless power supply function according to the verification operation when the first electric auxiliary vehicle (110_1, 210_1) is set as the power supplier.

5. The power management system (100, 200) according to claim 4, wherein the operation interface (213_1, 213_2) displays the password (SKW) from the management device (120, 220).

6. The power management system (200) according to claim 4, wherein the first electric auxiliary vehicle (110_1, 210_1) further comprises:
a battery (BTR1, BTR2), configured to store battery power (PB1, PB2);
a motor (MTR1, MTR2); and
a power control circuit (214_1, 214_2), coupled to the battery (BTR1, BTR2), the motor (MTR1, MTR2), and the microcontroller (212_1, 212_2, 232), configured to:
drive the motor (MTR1, MTR2) by using the battery power (PB1, PB2) of the battery (BTR1, BTR2), and charge the battery (BTR1, BTR2) by using a pedaling force during a riding period,
charge the battery (BTR1, BTR2) by using wireless power (PC) from the wireless charging platform (130, 230) when the first electric auxiliary vehicle (110_1, 210_1) is located within the wireless charging range (RW) of the wireless charging platform (130, 230).

7. The power management system (200) according to claim 6, wherein the microcontroller (212_1, 212_2, 232) controls the power control circuit (214_1, 214_2) in response to the power supply command and the verification operation so that the power control circuit (214_1, 214_2) transmits the battery power (PB1, PB2) to the second electric auxiliary vehicle (110_2, 210_2) by using a wireless method.

8. The power management system (200) according to claim 6, wherein the power control circuit (214_1, 214_2) comprises:
a charge and discharge circuit (2141_1, 2141_2), coupled to the battery (BTR1, BTR2) and the motor (MTR1, MTR2);
a wireless power transmission circuit (2142_1, 2142_2), coupled to the charge and discharge circuit (2141_1, 2141_2);
a sensing circuit (2143_1, 2143_2), configured to sense a status of the battery (BTR1, BTR2); and
a power controller (2144_1, 2144_2), coupled to the microcontroller (212_1, 212_2, 232), the charge and discharge circuit (2141_1, 2141_2), and the wireless power transmission circuit (2142_1, 2142_2), configured to control the charge and discharge circuit (2141_1, 2141_2) and the wireless power transmission circuit (2142_1,2142_2), so that the power control circuit (214_1, 214_2) converts the battery power (PB1, PB2) into the wireless power (PC) and transmits the wireless power to the second electric auxiliary vehicle (110_2, 210_2) by using a wireless method when the first electric auxiliary vehicle (110_1, 210_1) is set as the power supplier.

9. The power management system (100, 200) according to claim 1, wherein:
the second electric auxiliary vehicle (110_2, 210_2) is operated to display a vehicle code (CD1, CD2) of the second electric auxiliary vehicle (110_2, 210_2), and
the first electric auxiliary vehicle (110_1, 210_1) learns that the second electric auxiliary vehicle (110_2, 210_2) is a power recipient according to the vehicle code (CD1, CD2), and provides power to the second electric auxiliary vehicle (110_2, 210_2) by the wireless power supply manner.

10. A power management method (S100, S200, S300, S400) for wireless power supply, comprising:
generating a password (SKW) through a wireless charging platform (130, 230) and providing the password (SKW) and a user identification code (UID) of a first electric auxiliary vehicle (110_1, 210_1) to a management device (120, 220) when the first electric auxiliary vehicle (110_1, 210_1) is located within a wireless charging range (RW) of a wireless charging platform (130, 230);
communicating with the management device (120, 220) through the first electric auxiliary vehicle (110_1, 210_1) according to the user identification code (UID) to receive the password (SKW) from the management device (120, 220) and displaying the password (SKW);
activating a wireless power supply function through the first electric auxiliary vehicle (110_1, 210_1) according to a verification operation of the password (SKW) and the user identification code (UID); and
providing power to a second electric auxiliary vehicle (110_2, 210_2) through the first electric auxiliary vehicle (110_1, 210_1) by a wireless power supply manner.

11. The power management method (S100, S200, S300, S400) according to claim 10, further comprising:
notifying the management device (120, 220) through the wireless charging platform (130, 230) to bind the user identification code (UID) of the first electric auxiliary vehicle (110_1, 210_1) and the password (SKW) when the first electric auxiliary vehicle (110_1, 210_1) is located outside the wireless charging range (RW) of the wireless charging platform (130, 230).

12. The power management method (S100, S200, S300) according to claim 10, wherein activating the wireless power supply function through the first electric auxiliary vehicle (110_1, 210_1) according to the verification operation of the password (SKW) and the user identification code (UID) comprises:
providing a power supply command;
setting the first electric auxiliary vehicle (110_1, 210_1) as a power supplier in response to the power supply command; and
activating the wireless power supply function according to the verification operation through the first electric auxiliary vehicle (110_1, 210_1) when the first electric auxiliary vehicle (110_1, 210_1) is set as the power supplier.

13. The power management method (S100, S200, S400) according to claim 10, further comprising:
setting the second electric auxiliary vehicle (110_2, 210_2) as a power recipient.

14. The power management method (S100, S200, S400) according to claim 10, further comprising:
activating a wireless power receiving function through the second electric auxiliary vehicle (110_2, 210_2) according to a verification operation of the second electric auxiliary vehicle (110_2, 210_2).

15. The power management method (S100, S200, S400) according to claim 10, further comprising:
operating the second electric auxiliary vehicle (110_2,210_2) to display a vehicle code (CD1, CD2) of the second electric auxiliary vehicle (110_2, 210_2), and
learning that the second electric auxiliary vehicle (110_2, 210_2) is a power recipient through the first electric auxiliary vehicle (110_1, 210_1) according to the vehicle code (CD1, CD2).
